# EUROPEAN PATENT APPLICATION

(11) **EP 2 811 280 A1**
(43) Date of publication of application: **10.12.2014**
(21) Application number: 14001866.4
(22) Date of filing: 28.05.2014
(51) Int. Cl.: G01N 1/22, G01N 15/06

(54) **Exhaust gas sampling apparatus**

(30) Priority: 03.06.2013 JP 2013117262
(71) Applicant: HORIBA, LTD., Kyoto-shi, Kyoto 601-8510 (JP)
(72) Inventor: Kumagai, Tatsuki, Kyoto-shi, Kyoto 601-8510 (JP); Egusa, Takashi, Kyoto-shi, Kyoto 601-8510 (JP)
(74) Representative: Müller - Hoffmann & Partner

(57) **Abstract**

The present invention is one that downsizes an exhaust gas sampling apparatus such as a CVS as well as uniforming temperature of diluted exhaust gas passing through a flow rate controller such as a critical flow venturi, and has a casing 10 formed with a gas introduction port PT3 for introducing the diluted exhaust gas and a gas lead-out port PT4 for leading out the diluted exhaust gas, in which a temperature regulating mechanism 2 is contained in the casing 10, the flow rate controller 31 is fluidly connected to the gas lead-out port PT4, and between the gas introduction port PT3 and the temperature regulating mechanism 2, a dispersion structure 12 that disperses the diluted exhaust gas introduced from the gas introduction port PT3 is provided.

## Description

### Technical Field

The present invention relates to an exhaust gas sampling apparatus such as a constant volume sampling apparatus.

### Background Art

In the past, as a dilution sampling system that dilutes collected exhaust gas with diluent gas such as air, and measures the concentration of a component contained in the exhaust gas diluted (hereinafter referred to as diluted exhaust gas), a constant volume sampling apparatus (hereinafter referred to as a CVS) has been widely used.

As described in Patent Literature 1, in the CVS, on an upstream side of a flow rate control mechanism including a critical flow venturi and a suction pump, a heat exchanger that regulates temperature of diluted exhaust gas to a constant value is provided. The diluted exhaust gas having passed through the heat exchanger flows into a critical flow venturi through a connecting pipe. At this time, the diluted exhaust gas immediately after passing through the heat exchanger has temperature unevenness because of an uneven temperature distribution. However, the diluted exhaust gas is sufficiently stirred and has uniform temperature before arriving at the critical flow venturi because of some reason such as a change (reduction) in flow path cross section, which occurs when flowing from the heat exchanger to the connecting pipe, a change (reduction or expansion) in flow path cross section, which occurs in the middle of flowing through the connecting pipe, or a bending part of the connecting pipe.

### Citation List

### Patent Literature

Patent Literature 1: JP-A-10-104134

### Summary of Invention

### Technical Problem

In recent years, because of the installation of various test facilities in a measuring room or a laboratory, or another reason, downsizing of a CVS has been demanded. Also, to achieve the downsizing of a CVS, the present inventor has been considering to make a connecting pipe between a heat exchanger and a critical flow venturi as short as possible, or to eliminate the connecting pipe.

However, in the case of eliminating the connecting pipe, diluted exhaust gas having passed through the heat exchanger flows into the critical flow venturi with keeping temperature unevenness. A flow rate of the exhaust gas passing through the critical flow venturi is dependent on temperature, and changes in response to a change in temperature of the diluted exhaust gas.

CVSs include one adapted to connect a sampling line on an upstream side of a heat exchanger, perform proportional sampling of diluted exhaust gas through the sampling line, and make the diluted exhaust gas pass through a PM collecting filter in the sampling line. Note that proportional sampling refers to a method for sampling diluted exhaust gas at a constant ratio with respect to a control flow rate of a critical flow venturi. In the proportional sampling, in the past, a rotation speed of a suction pump provided in a sampling line, or the like, has been controlled to a constant value on the premise that a control flow rate of a critical flow venturi is constant.

However, there is a problem that the diluted exhaust gas immediately after passing through the heat exchanger has temperature unevenness to change a control flow rate of a critical flow venturi, and therefore the proportional sampling cannot be accurately performed.

Note that in the case of precisely performing proportional sampling, it is possible to, from temperature and pressure of diluted exhaust gas flowing into a critical flow venturi, and a control flow rate of the critical flow venturi, calculate an instantaneous flow rate of the diluted exhaust gas to perform feedback control of a rotation speed of a suction pump. However, this method needs to make a correction of a delay time of the exhaust gas in consideration of factors such as a flow time of the exhaust gas from a sampling point to the critical flow venturi, and therefore calculation is complicated.

Also, in the case of using an integrated flow rate, which is obtained by integrating a control flow rate of a critical flow venturi, to perform total mass measurement, a change in the control flow rate of the critical flow venturi changes causes a measurement error.

Therefore, the present invention is mainly intended to downsize an exhaust gas sampling apparatus such as a CVS as well as uniforming temperature of diluted exhaust gas passing through a flow rate controller such as a critical flow venturi.

### Solution to Problem

That is, an exhaust gas sampling apparatus according to the present invention is an exhaust gas sampling apparatus provided with: a diluted exhaust gas flow path through which diluted exhaust gas produced by diluting exhaust gas with diluent gas flows; a temperature regulating mechanism that is provided in the diluted exhaust gas flow path to regulate temperature of the diluted exhaust gas; and a flow rate control mechanism that is provided on a downstream side of the temperature regulating mechanism in the diluted exhaust gas flow path to control a flow rate of the diluted exhaust gas to a constant flow rate, and has a casing that constitutes a part of the diluted exhaust gas flow path and is formed with a gas introduction port for introducing the diluted exhaust gas and a gas lead-out port for leading out the diluted exhaust gas, wherein: the temperature regulating mechanism is contained in the casing, and the flow rate control mechanism is fluidly connected to the gas lead-out port; and between the gas introduction port and the temperature regulating mechanism, a dispersion structure that disperses the diluted exhaust gas introduced from the gas introduction port is provided.

If so, the casing contains the temperature regulating mechanism, and the flow rate control mechanism is fluidly connected to the gas lead-out port of the casing, so that a pipe that has been provided between a temperature regulating mechanism and a flow rate control mechanism in the past can be made as short as possible, or can be made unnecessary to downsize an exhaust gas sampling apparatus.

As a result of making the pipe between the temperature regulating mechanism and the flow rate control mechanism as short as possible, or unnecessary as described, a flow velocity distribution of diluted exhaust gas passing through the temperature regulating mechanism causes a temperature distribution of the diluted exhaust gas after passing through the temperature regulating mechanism to become non-uniform to give rise to temperature unevenness. However, the present invention is provided with the dispersion structure between the gas introduction port and the temperature regulating mechanism, and therefore a flow velocity distribution of the diluted exhaust gas passing through the temperature regulating mechanism can be uniformed to uniform a temperature distribution of the diluted exhaust gas after passing through the temperature regulating mechanism. This enables the diluted exhaust gas passing through a critical flow venturi to be stabilized at a constant flow rate, and therefore proportional sampling can be accurately performed to improve accuracy of total mass measurement.

Note that on a downstream side of the temperature regulating mechanism, i.e., between the temperature regulating mechanism and the gas lead-out port, a dispersion structure may be provided; however, a gap between the temperature regulating mechanism and the gas lead-out port is narrow, and therefore even in the case of providing the dispersion structure, it is difficult to sufficiently uniform the temperature distribution of the diluted exhaust gas after passing through the temperature regulating mechanism.

Desirably, the dispersion structure is configured to include a perforated plate that is provided with facing to the gas introduction port.

If so, the configuration of the dispersion structure can be extremely simplified. Also, by appropriately setting an opening size of holes formed in the perforated plate, a hole density or a hole opening ratio, and the like, a flow velocity distribution of the diluted exhaust gas can be easily controlled.

Desirably, the gas introduction port is provided in one side wall of the casing, and the gas lead-out port is provided in the other side wall facing to the one side wall of the casing.

If so, a configuration of the casing can be extremely simplified. Also, the gas introduction port, dispersion structure, temperature regulating mechanism, and gas lead-out port are arranged in this order in line, and therefore a dispersion effect caused by providing the dispersion structure can be made more noticeable.

In particular, the one side wall and the other side wall are desirably side walls vertically facing to each other. If so, the gas introduction port, dispersion structure, temperature regulating mechanism, and gas lead-out port are vertically arranged in this order, and therefore an installation area of the exhaust gas sampling apparatus can be particularly decreased.

Desirably, the casing has a plurality of gas lead-out ports, and the plurality of gas lead-out ports are respectively fluidly connected with flow rate controllers.

By providing the dispersion structure in a configuration where the casing is provided with the plurality of flow rate controllers as described, the temperature of the diluted exhaust gas passing through each of the flow rate controllers can be uniformed.

Desirably, the temperature regulating mechanism has a heating device that heats the diluted exhaust gas and a cooling device that cools the diluted exhaust gas; the heating device and the cooling device are arranged in this order from a gas introduction port side; and a temperature sensor that detects the temperature of the diluted exhaust gas is provided on a downstream side of the cooling device in the casing.

If so, the temperature of the diluted exhaust gas can be accurately measured to accurately perform temperature regulation of the diluted exhaust gas.

Note that in the case of reversely arranging the heating device and the cooling device, i.e., in the case of arranging the cooling device and the heating device in this order from the gas introduction port, and arranging the temperature sensor on a downstream side of the heating device in the casing, the temperature sensor is heated by heat radiation of a heater used as the heating device, and therefore detects a higher temperature than the temperature of the diluted exhaust gas. In such a situation, using the detected temperature from the temperature sensor to control the temperature regulating mechanism gives rise to a problem that an actual temperature of the diluted exhaust gas becomes lower than a target temperature.

Desirably, the cooling device is provided with a cooling element that exchanges heat with the diluted exhaust gas and a housing that contains the cooling element; the housing has, in one end surface facing to the gas introduction port side, an inlet for introducing the diluted exhaust gas, and in the other end surface facing to a gas lead-out port side, an outlet for leading out the diluted exhaust gas; and a partitioning structure that partitions a space between the casing and the housing between the gas introduction port side and the gas lead-out port side is provided.

If so, the diluted exhaust gas can be prevented from flowing toward the downstream side of the cooling device from a space between the housing for the cooling device and the casing. That is, the partitioning structure causes the diluted exhaust gas introduced from the gas introduction port to entirely pass the cooling element, so that temperature unevenness can be further reduced to further uniform the temperature of the diluted exhaust gas flowing into the flow rate controller.

### Advantageous Effects of Invention

According to the present invention configured as described, the single casing is provided with the temperature regulating mechanism and the flow rate control mechanism, and therefore an exhaust gas sampling apparatus can be downsized. Also, between the gas introduction port of the casing and the temperature regulating mechanism, the dispersion structure is provided, and therefore the temperature of the diluted exhaust gas flowing into the flow rate control mechanism can be uniformed to stabilize the diluted exhaust gas passing through the critical flow venturi at a constant flow rate.

### Brief Description of Drawings

FIG. 1 is a diagram schematically illustrating a configuration of an exhaust gas sampling apparatus of the present embodiment;
FIG. 2 is a vertical cross-sectional view along a left-right direction of a casing in the same embodiment;
FIG. 3 is a vertical cross-sectional view along a front-rear direction;
FIG. 4 is a perspective view illustrating a positional relation between a gas introduction port and a dispersion structure in the same embodiment; and
FIG. 5 includes schematic diagrams illustrating flow velocity distributions in the presence and absence of the dispersion structure in the same embodiment. Description of Embodiments

In the following, one embodiment of an exhaust gas sampling apparatus according to the present invention is described with reference to the drawings.

An exhaust gas sampling apparatus 100 of the present embodiment is one that is used for a gas analyzing system for analyzing a component contained in exhaust gas emitted from, for example, an engine or the like, and employs a dilution sampling system that dilutes the exhaust gas with diluent gas such as air (dilution air) several times (e.g., 10 to 20 times) to measure concentration.

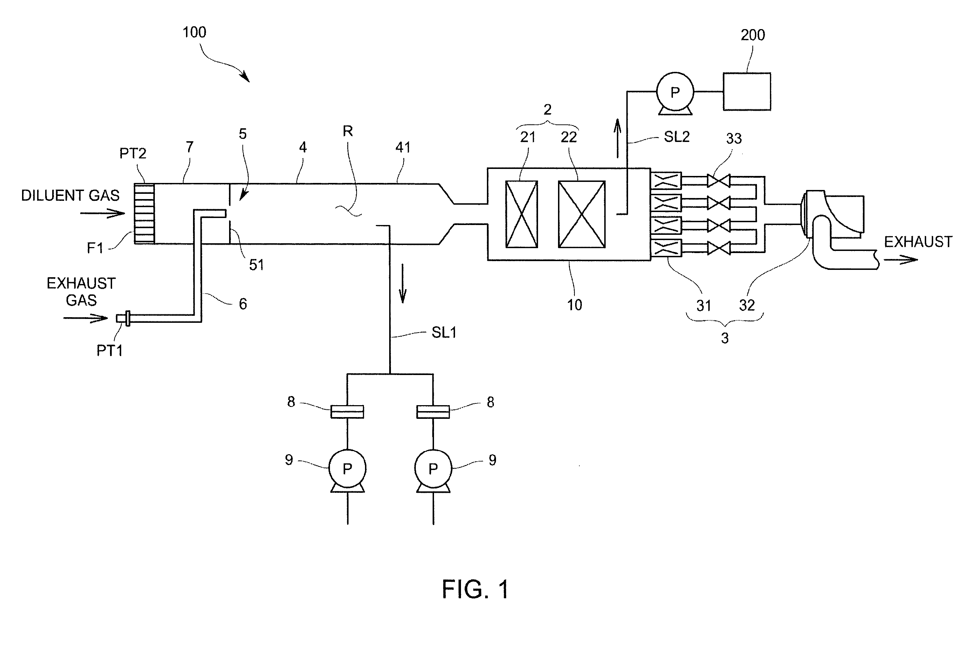

Specifically, the exhaust gas sampling apparatus 100 is, as illustrated in FIG. 1, provided with: a diluted exhaust gas flow path R through which diluted exhaust gas produced by diluting the exhaust gas with the diluent gas flows; a temperature regulating mechanism 2 that is provided in the diluted exhaust gas flow path R to regulate temperature of the diluted exhaust gas; and a flow rate control mechanism 3 (a constant volume sampling device) that is provided on a downstream side of the temperature regulating mechanism 2 in the diluted exhaust gas flow path R to control a flow rate of the diluted exhaust gas to a constant flow rate.

On an upstream side of a diluted exhaust gas pipe 4 constituting the diluted exhaust gas flow path R, a mixing part 5 for mixing the exhaust gas and the diluent gas with each other is connected. The mixing part 5 in the present embodiment is configured to use an orifice 51. Also, the mixing part 5 is connected with: an exhaust gas introduction pipe 6 of which one end is provided with an exhaust introduction port PT1; and a diluent gas introduction pipe 7 of which one end is provided with a diluent gas introduction port PT2. In addition, the diluent gas introduction port PT2 is provided with a filter F1 for removing impurities in air.

Further, on a downstream side of the mixing part 5 in the diluted exhaust gas pipe 4, a dilution tunnel 41 is formed, and in the dilution tunnel 41, the exhaust gas and the diluent gas are uniformly mixed. In addition, the dilution tunnel 41 is connected with a sampling line SL1 for sampling the diluted exhaust gas to introduce the sampled diluted exhaust gas into PM collecting filters 8. The sampling line SL1 is one that samples the diluted exhaust gas at a constant ratio with respect to the flow rate (CVS flow rate) of the diluted exhaust gas, which is made equal to the constant flow rate by the flow rate control mechanism 3, and provided with the PM collecting filters 8 and suction pumps 9 in this order. Further, a rotation speed of each of the suction pumps 9 is controlled constant by an unillustrated control device.

As illustrated in FIGS. 1 to 3, the temperature regulating mechanism 2 has a heating device 21 that heats the diluted exhaust gas, and a cooling device 22 that cools the diluted exhaust gas.

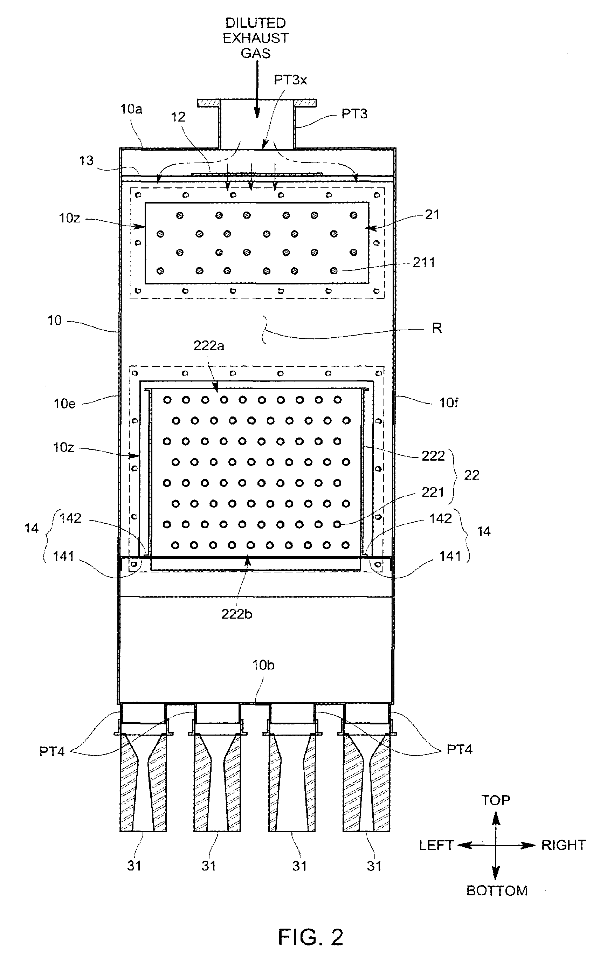

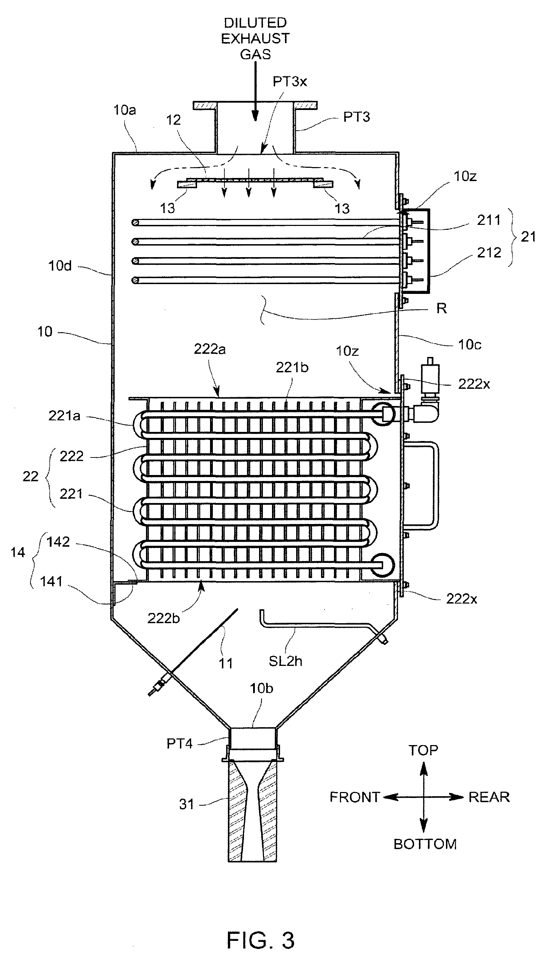

The heating device 21 is, as illustrated in FIGS. 2 and 3, provided with heating elements 211 that heat the diluted exhaust gas with being in contact with the diluted exhaust gas, and a supporting body 212 that supports the heating elements 211. Each of the heating elements 211 in the present embodiment is a sheath heater that is configured to contain a heating body such as a nichrome wire in a metallic heater pipe and fill a gap between the heating body and the heater pipe with highly thermally conductive insulating powder such as magnesium oxide.

Further, the heating device 21 is configured to be able to, depending on the flow rate of the diluted exhaust gas, which is set by the flow rate control mechanism 3, stepwise or continuously switch electric capacity [kVA] for driving the heating elements 211, which are the sheath heaters. For example, in the case where the heating device 21 is configured to be able to switch the electric capacity between 6 kVA and 12 kVA, the heating device 21 may switch the electric capacity to 6 kVA for the diluted exhaust gas flow rate smaller than a predetermined flow rate, and to 12 kVA for the diluted exhaust gas flow rate larger than the predetermined flow rate.

The cooling device 22 is, as illustrated in FIGS. 2 and 3, provided with a cooling element 221 that exchanges heat with the diluted exhaust gas with being in contact with the diluted exhaust gas, and a housing 222 that contains and supports the cooling element 221. The cooling element 221 in the present embodiment has: a plurality of coolant pipes 221a through which cooling water such as industrial water or tap water flows; and a plurality of heat transfer fins 221b attached to the plurality of coolant pipes 221a. Also, the coolant pipes 221a are connected with an unillustrated cooling water circulating mechanism including a circulating pump, flow rate regulating valve, and the like. The housing 222 is one formed in a substantially rectangular parallelepiped shape, and one end surface thereof has an inlet 222a for introducing the diluted exhaust gas, whereas the other end surface thereof facing to the one end surface has an outlet 222b for leading out the diluted exhaust gas.

Further, the cooling device 22 is configured to be able to regulate a flow rate of the cooling water circulating through the cooling pipes 221a by adjusting a valve opening level of the flow rate regulating valve depending on the diluted exhaust gas flow rate set by the flow rate control mechanism 3. The flow rate regulating valve is configured to include a motor-operated valve, and subjected to proportional control by an unillustrated control device so as to gradually increase the valve opening level as the diluted exhaust gas flow rate increases.

The flow rate control mechanism 3 is one that performs flow rate control so as to make constant a total flow rate of the exhaust gas introduced from the exhaust gas introduction pipe 6 and the diluent gas introduced from the diluent gas introduction pipe 7, and as illustrated in FIG. 1, configured to include: a plurality of flow rate controllers 31 respectively including critical flow venturis

(CFVs) connected on a downstream side of the temperature regulating mechanism 2 in the diluted exhaust gas flow path R, and suction means 32 respectively connected on a downstream side of the flow rate controllers 31 in the diluted exhaust gas flow path R, such as blowers or pumps. Also, between the plurality of critical flow venturis 31 and the suction pump 32, on/off valves 33 are provided correspondingly to the respective critical flow venturis 31, and select a critical flow venturi 31 where the diluted exhaust gas is to flow, and thereby the total flow rate is set. By making a difference between pressures on upstream and downstream sides of the selected critical flow venturi 31 equal to a predetermined value or more with the suction pump 32, the total flow rate is made constant. Note that the diluted exhaust gas sucked by the suction pump 32 is discharged outside.

In addition, between the temperature regulating mechanism 2 and the flow rate control mechanism 3 in the diluted exhaust gas flow path R, a sampling line SL2 for sampling the diluted exhaust gas into an analyzer 200 such as an exhaust gas collecting bag is connected. Also, a fore end part of the sampling line SL2 is provided with a sampling flow rate control mechanism (not illustrated) for sampling the diluted exhaust gas at a constant ratio with respect to the CVS flow rate, such as a sampling venturi.

Further, as illustrated in FIGS. 2 and 3, the exhaust gas sampling apparatus 100 of the present embodiment has a casing 10 that is one constituting part of the diluted exhaust gas flow path R, and formed with: a gas introduction port PT3 for introducing the diluted exhaust gas; and gas lead-out ports PT4 for leading out the diluted exhaust gas.

The casing 10 contains the temperature regulating mechanism 2, and the gas lead-out ports PT4 of the casing 10 are respectively fluidly connected with the critical flow venturis 31 as the flow rate controllers.

Regarding the casing 10, an upper wall 10a that is one end wall thereof is formed with the gas introduction port PT3, and a lower wall 10b facing to the upper wall 10a is formed with the gas lead-out ports PT4. The upper wall 10a is a wall formed in a substantially rectangular flat plate shape, and in the central part of the upper wall 10a, the gas introduction port PT3 is formed. The gas introduction port PT3 in the present embodiment has a gas inlet PT3x of a substantially circular shape. The lower wall 10b is formed with the plurality of (four in the present embodiment) gas lead-out ports PT4 linearly in line (see FIG. 2). Also, the respective gas lead-out ports PT4 are fluidly connected with the critical flow venturis 31 having mutually different critical flow rates. In the present embodiment, downstream side end parts of the gas lead-out ports PT4 are attached with upstream side end parts of corresponding ones of the critical flow venturis 31 through splicing fittings.

As illustrated in FIG. 3, one (rear side wall) 10c of side walls of the casing 10 is formed with an attachment opening part 10z for attaching the heating device 21 and the cooling device 22, and through the attachment opening part 10z, the heating device 21 and the cooling device 22 are contained inside the casing 10 and then attached. Specifically, the heating device 21 is fixed with the heating elements 211 being contained inside the casing 10, and electrical connecting parts thereof are protected by a protecting body 212. On the other hand, the cooling device 22 is attached by fixing flange parts 222x, which are provided on a rear end surface of the housing 222, on the rear side wall 10c of the casing 10 with screws with the cooling elements 221 and the housing 222 containing the cooling elements 221 being contained in the casing 10. In this attachment state, the inlet 222a formed in the one end surface (upper surface) of the housing 222 for the cooling device 22 faces to the gas introduction port PT3 side (upper side), and the outlet 222b formed in the other end surface (lower surface) of the housing 222 faces to the gas lead-out port PT4 side (lower side).

Specifically, the heating device 21 and the cooling device 22 are arranged in this order with respect to the gas introduction port PT3. That is, the heating device 21 is arranged on the gas introduction port PT3 side (upper side of the casing 10), and the cooling device 22 is arranged on the gas lead-out port PT4 side (lower side of the casing 10).

In the casing 10 in the present embodiment, in order to efficiently introduce the diluted exhaust gas having passed through the cooling device 22 into each of the flow rate controllers 31 without retaining the diluted exhaust gas in the casing 10, as illustrated in FIG. 3, the diluted exhaust gas flow path R is narrowed so as to decrease a flow path cross sectional area on a downstream side of the cooling device 22. Specifically, the mutually opposite front and rear side walls 10d and 10c of the casing 10 respectively have opposite sloping surfaces between which a distance decreases toward a lower side of the cooling device 22, i.e., toward the gas introduction ports PT4. In the present embodiment, the front and rear side walls 10d and 10c are bent inward, and thereby the sloping surfaces are formed. This forms a space having a trapezoidal cross section on the downstream side of the cooling device 22 in the casing 10.

Further, on the downstream side of the cooling device 22 in the casing 10, a temperature sensor 11 that detects the temperature of the diluted exhaust gas and includes, for example, a platinum resistance thermometer, is provided. The temperature sensor 11 is provided with being inserted inside from the sloping surface of the front side wall 10d of the casing 10. Also, a position to provide the temperature sensor 11 is set to a position that is not easily influenced by a flow rate change due to switching a critical flow venturi 31 where the diluted exhaust gas is flowed. Specifically, the position to provide the temperature sensor 11 is near the outlet 222b of the housing 222 for the cooling device 22, and set to a position where a difference from an inlet temperature of each of the critical flow venturis 31 falls within a predetermined range (±2 °C or less) even in the case of any flow rate combination.

In the present embodiment, a control device (not illustrated) that, with use of the diluted exhaust gas temperature obtained by the temperature sensor 11, performs PID control of the heating device 21 and the cooling device 22 is provided. Specifically, the control device is one that, on the basis of the diluted exhaust gas temperature obtained by the temperature sensor 11, performs PWM control of ON/OFF of the heating device 21 as well as PWM control of ON/OFF of the cooling device 22. In detail, the control device controls the heating device 21 and the cooling device 22 so as to make the diluted exhaust gas temperature equal to 40 °C. To perform the PWM control of ON/OFF of the heating device 21, performing PWM control of an ON/OFF duty ratio of a power supply device that energizes the heating device 21 is possible. Also, to perform the PWM control of ON/OFF of the cooling device 22, performing PWM control of an ON/OFF duty ratio of the circulating pump provided for the cooling water circulating mechanism, or performing PWM control of an ON/OFF duty ratio of an on/off valve provided for the cooling water circulating mechanism is possible.

Note that a conventional system performs ON-OFF control of a heating device 21 and a cooling device 22. Specifically, the ON-OFF control is performed such that by turning the cooling device 22 OFF when the heating device 21 is ON, or turning the cooling device 22 ON when the heating device 21 is OFF, one of the heating device 21 and the cooling device 22 is inevitably ON. However, such ON-OFF control has a problem of causing hunting in the case where diluted exhaust gas temperature is within a certain temperature range (e.g., ±5 °C) to vary a flow rate of the diluted exhaust gas passing through a critical flow venturi 31 as well. In the present embodiment, by performing the PID control of the heating device 21 and the cooling device 22, temperature regulating performance for the diluted exhaust gas can be made to fall within a range of ±2 °C.

Also, in the casing 10, as illustrated in FIG. 3, on the downstream side of the cooling device 22, a sampling pipe SL2h constituting the sampling line SL2 is connected. The sampling pipe SL2h is, as with the temperature sensor 11, provided with being inserted inside from the sloping surface of the rear side wall 10c of the casing 10.

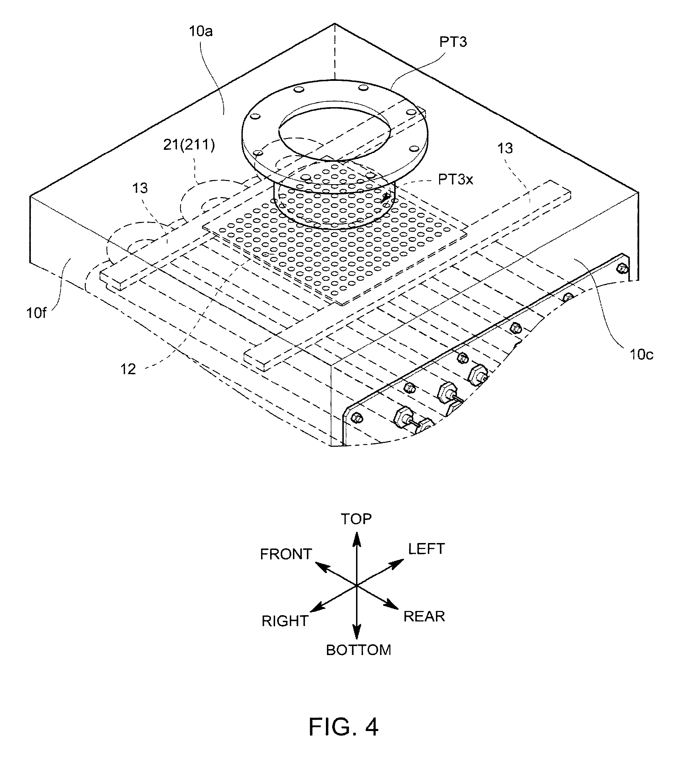

Further, in the present embodiment, as illustrated in FIGS. 2 to 4, between the gas introduction port of the casing 10 and the heating device 21 contained in the casing 10, a dispersion structure 12 that disperses the diluted exhaust gas introduced from the gas introduction port PT3 outward from the gas introduction port PT3 is provided.

The dispersion structure 12 is one that eliminates ununiformity in flow velocity distribution of the diluted exhaust gas, which is caused by a larger flow path cross-sectional area of the casing 10 than a flow path cross-sectional area of the gas introduction port PT3. Specifically, the dispersion structure 12 is one that increases fluid resistance of a central space part facing to the gas introduction port PT3, and thereby disperses the diluted exhaust gas from the central space part to a surrounding space part in the casing 10.

The dispersion structure 12 includes a perforated plate that is formed with a number of through-holes, made of, for example, stainless steel, and formed in a rectangular flat plate shape. The perforated plate 12 in the present embodiment is a punching metal plate that is formed with the through-holes having a circular opening shape and has an opening ratio of, for example, 30 % to 50 %. The perforated plate 12 is arranged so as to face to the gas inlet PT3x of the gas introduction port PT3. Specifically, the perforated plate 12 is attached to a supporting member 13 provided to the casing 10, and thereby arranged so as to face to the gas inlet PT3x.

The size of the perforated plate 12 is larger than an opening size of the gas inlet PT3x. Note that a spreading angle of the diluted exhaust gas introduced from the gas inlet PT3x with respect to a flow direction is approximately 6 to 13 degrees, and therefore the size of the perforated plate 12 is set in consideration of a distance from the gas inlet PT3x and the spreading angle. In addition, in the case where the distance of the perforated plate 12 from the gas inlet PT3x is small, a pressure loss is large, and therefore in consideration of this, the distance of the perforated plate 12 from the gas inlet PT3x is set.

Note that in the case where the size of the perforated plate 12 is smaller than the gas inlet PT3x, the non-uniformity in flow velocity distribution of the diluted exhaust gas introduced from the gas inlet PT3x cannot be sufficiently eliminated. On the other hand, in the case of increasing the size of the perforated plate 12 to cover throughout a flow path of the casing 10, the pressure loss due to the perforated plate 12 is increased.

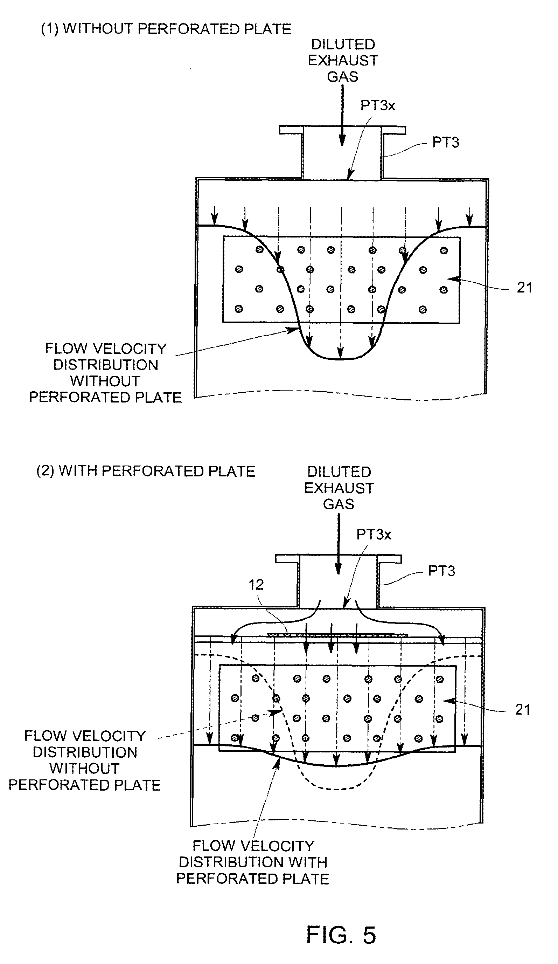

FIG. 5 schematically illustrates a flow velocity distribution of the diluted exhaust gas passing through the heating device 21 without the dispersion structure 12 (see FIG. 5(1)), and that with the dispersion structure 12 (see FIG. 5(2)). Without the dispersion structure 12, the flow velocity distribution shows that a flow velocity in the central space part facing to the gas introduction port PT3 is high, and a flow velocity in the surrounding space part is low. On the other hand, with the dispersion structure 12, the fluid resistance of the central space part is increased, and therefore the diluted exhaust gas flows toward the surrounding space part, so that the uniformity in flow velocity between the central space part and the surrounding space part can be eliminated.

Further, the present embodiment is, as illustrated in FIGS. 2 and 3, provided with a partitioning structure 14 that partitions a space between the housing 222 contained in the casing 10 and the casing 10 between the gas introduction port PT3 side and the gas lead-out port PT4 side.

The partitioning structure 14 is one that blocks the diluted exhaust gas heated by the heating device 21 from flowing to the gas lead-out ports PT4 without being cooled by the cooling device 22. Specifically, the partition structure 14 includes: base parts 141 that are provided with protruding inward from side walls of the casing 10; and attachment parts 142 that are provided to the housing 222 for the cooling device 22 and respectively attached to the base parts 141.

The base parts 141 are provided on inner surfaces of three side walls 10d to 10f excluding the rear side wall 10c having the attachment opening part 10z out of the four side walls 10c to 10f of the casing 10. The base parts 141 in the present embodiment are ones on which the housing 222 for the cooling device 22 is placed, and the two base parts 141 provided on the mutually opposite left and right side walls 10e and 10f respectively serve as slide parts for sliding the housing 222 at the time of attaching the cooling device 22.

The attachment parts 142 provided to the housing 222 are configured as flanges provided on side walls of the housing 222, which correspond to the base parts 141. The flanges 142 in the present embodiment are continuously formed outward from an opening edge forming the outlet 222b of the housing 222.

Further, the present embodiment is configured such that in a state where the cooling device 22 is attached in the casing 10, the flanges 142 provided to the housing 222 for the cooling device 22 are in contact with the base parts 141 provided on the side walls 10d to 10f of the casing 10 without any gap between the base parts 141 and corresponding ones of the flanges 142, and thereby the diluted exhaust gas is prevented from passing around the housing 222 to flow into any of the gas lead-out ports PT4 and critical flow venturis 31. This enables a temperature distribution of inlet temperature of each of the critical flow venturis 31 to be prevented from being deteriorated due to the heated diluted exhaust gas that flows into the critical flow venturi 31 without being cooled.

### <Effects of the present embodiment>

According to the exhaust gas sampling apparatus 100 according to the present embodiment configured as described, the casing 10 contains the temperature regulating mechanism 2 and also the critical flow venturis 31 is provided at the gas lead-out ports PT4 of the casing 10, so that the need for pipes that have been provided between a temperature regulating mechanisms 2 and critical flow venturis 31 in the past can be eliminated to downsize an exhaust gas sampling apparatus 100.

Also, the dispersion structure 12 is provided between the gas introduction port PT3 and the temperature regulating mechanism 2, so that the flow velocity distribution of the diluted exhaust gas passing through the temperature regulating mechanism 2 can be uniformed, and consequently, a temperature distribution of the diluted exhaust gas having passed through the temperature regulating mechanism 2 can be uniformed. In addition, the dispersion structure 12 is configured to include the perforated plate, and therefore the configuration of the dispersion mechanism 12 can be extremely simplified. Also, by appropriately setting the size of the perforated plate 12, an opening size of the holes formed in the perforated plate 12, a hole density or a hole opening ratio, and the like, the flow velocity distribution of the diluted exhaust gas can be easily controlled.

Further, the upper and lower walls 10a and 10b of the casing 10 are respectively provided with the gas introduction port PT3 and the gas lead-out ports PT4, and the temperature regulating mechanism 2 and the critical flow venturis 31 are vertically arranged, so that an installation area of the exhaust gas sampling apparatus 100 can be decreased.

In addition, between the housing 222 for the cooling device 22, and the side walls 10d to 10f of the casing 10, the partitioning structure 14 is provided, and therefore the diluted exhaust gas can be prevented from leaking toward the downstream side of the cooling device 22 from between the housing 222 for the cooling device 22 and the side walls 10d to 20f of the casing 10. This enables the temperature of the diluted exhaust gas flowing into each of the critical flow venturis 31 can be further uniformed.

As described above, the present embodiment can not only downsize an exhaust gas sampling apparatus 100 but uniform the temperature of the diluted exhaust gas flowing into each of the critical flow venturis 31, and therefore a flow rate of the diluted exhaust gas passing through the critical flow venturi 31 can be stabilized to a constant flow rate.

In doing so, in the case of performing proportional sampling through the sampling line SL1 connected on an upstream side of the temperature regulating mechanism 2 (specifically, connected to the dilution tunnel 41), the proportional sampling can be accurately performed only by controlling a rotation speed of each of the suction pumps provided in the sampling line SL1 to a constant rotation speed. Also, a flow rate of the diluted exhaust gas having passed through each of the critical flow venturis 31 is stabilized at a constant flow rate, so that the mass of the whole of the diluted exhaust gas having flowed through the dilution tunnel 41 (a control flow rate of the critical flow venturi 31 x a collected time) can be accurately obtained, and therefore a total emission amount of PM emitted from the engine can be accurately measured.

Further, a flow rate of the diluted exhaust gas having passed through each of the critical flow venturis 31 is stabilized at a constant flow rate, so that an integrated value of the diluted exhaust gas flow rate can be accurately obtained, and therefore emission mass of a predetermined component contained in the exhaust gas can be accurately measured. This enables fuel consumption to be accurately calculated by a carbon balance method.

### <Other variations>

Note that the present invention is not limited to the above-described embodiment.

For example, the above-described embodiment is configured to provide the gas lead-out ports PT4 of the casing 10 with the critical flow venturis 31 as the flow rate controllers to eliminate connecting pipes, respectively; however, without limitation to this, the present invention also includes a configuration in which between the gas lead-out ports PT4 and corresponding ones of the critical flow venturis 31, pipes that are short enough to avoid the gas temperature from becoming non-uniform is provided.

Also, the dispersion structure 12 in the above-described embodiment may be configured to, without limitation to the perforated plate, use a porous member as long as the porous member serves as a fluid resistor against the diluted exhaust gas introduced from the gas introduction port PT3. A shape of the perforated plate 12 is not limited to the rectangular flat plate shape, but may be a shape such as a circular shape, an elliptical shape, or a polygonal shape as long as the perforated plate 12 covers the gas inlet PT3x.

Further, in the above-described embodiment, the dispersion structure 12 is provided between the gas introduction port PT3 and the temperature regulating mechanism 2 (specifically, the heating device 21); however, in addition to this, in the present invention, a dispersion structure may also be provided between the heating device 21 and the cooling device 22. In doing so, the flow velocity distribution of the diluted exhaust gas flowing into the cooling device 22 can be further uniformed, and thereby the temperature distribution of the diluted exhaust gas having passed through the cooling device 22 can be further uniformed.

Still further, in the above-described embodiment, the gas introduction port PT3 is provided in the upper wall 10a of the casing 10 and the gas lead-out ports PT4 are provided in the lower wall 10b of the casing 10; however, the present invention may be adapted to provide the gas introduction port PT3 and the gas lead-out ports PT4 in mutually opposite side walls (e.g., left and right side walls, or front and rear side walls) of the casing 10, respectively. In doing so, a height dimension of the exhaust gas sampling apparatus 100 can be decreased.

In addition, the above-described embodiment is configured to provide the casing 10 with the plurality of critical flow venturis 31; however, the present invention may be configured to provide a single critical flow venturi of which a throat part area can be mechanically changed. Also, each of the flow rate controllers 31 in the above-described embodiment is one that uses the critical flow venturi; however, each of the flow rate controllers 31 may be one that, besides the critical flow venturi, uses a critical flow orifice (CFO) or a smooth approach orifice (SAO). Further, as the flow rate control mechanism 3, a positive displacement pump (PDP) may be used.

In addition, the exhaust gas sampling apparatus 100 of the above-described embodiment is one that dilutes the total amount of the exhaust gas; however, the exhaust gas sampling apparatus 100 may be one that partially dilutes the exhaust gas. That is, the exhaust gas sampling apparatus 100 may be one adapted to collect part of the exhaust gas through the exhaust gas introduction port PT1 and introduce the part into the diluted exhaust gas flow path.

The analyzer 200 may be an exhaust gas collecting bag or a measuring instrument that continuously measures a diluted exhaust gas component.

Besides, it should be appreciated that the present invention is not limited to any of the above-described embodiments, but can be variously modified without departing from the scope thereof.

### Reference Signs List

100: Exhaust gas sampling apparatus
R: Diluted exhaust gas flow path
2: Temperature regulating mechanism
21: Heating device
22: Cooling device
221: Cooling element
222: Housing
222a: Inlet
222b: Outlet
31: Flow rate controller
32^{:} Suction pump
10: Casing
PT3: Gas introduction port
PT4: Gas lead-out port
11: Temperature sensor
12: Dispersion structure (perforated plate)
14: Partitioning structure

## Claims

1. An exhaust gas sampling apparatus comprising:
a diluted exhaust gas flow path through which diluted exhaust gas produced by diluting exhaust gas with diluent gas flows;
a temperature regulating mechanism that is provided in the diluted exhaust gas flow path to regulate temperature of the diluted exhaust gas; and
a flow rate control mechanism that is provided on a downstream side of the temperature regulating mechanism in the diluted exhaust gas flow path to control a flow rate of the diluted exhaust gas to a constant flow rate,
the exhaust gas sampling apparatus having a casing that constitutes a part of the diluted exhaust gas flow path and is formed with a gas introduction port for introducing the diluted exhaust gas and a gas lead-out port for leading out the diluted exhaust gas, wherein:
the temperature regulating mechanism is contained in the casing, and the flow rate control mechanism is fluidly connected to the gas lead-out port; and
between the gas introduction port and the temperature regulating mechanism, a dispersion structure that disperses the diluted exhaust gas introduced from the gas introduction port is provided.

2. The exhaust gas sampling apparatus according to claim 1, wherein
the dispersion structure is configured to include a perforated plate that is provided with facing to the gas introduction port.

3. The exhaust gas sampling apparatus according to claim 1 or 2, wherein
the flow rate control mechanism is a constant volume sampling device including a flow rate controller and suction means.

4. The exhaust gas sampling apparatus according to claim 3, wherein:
the casing has a plurality of gas lead-out ports; and
the plurality of gas lead-out ports are respectively fluidly connected with flow rate controllers.

5. The exhaust gas sampling apparatus according to any of claims 1 to 4, wherein:
the temperature regulating mechanism has a heating device that heat the diluted exhaust gas and a cooling device that cools the diluted exhaust gas;
the heating device and the cooling device are arranged in this order from a gas introduction port side; and
a temperature sensor that detects the temperature of the diluted exhaust gas is provided on a downstream side of the cooling device in the casing.

6. The exhaust gas sampling apparatus according to claim 5, wherein:
the cooling device comprises a cooling element that exchanges heat with the diluted exhaust gas and a housing that contains the cooling element;
the housing has, in one end surface facing to the gas introduction port side, an inlet for introducing the diluted exhaust gas, and in the other end surface facing to a gas lead-out port side, an outlet for leading out the diluted exhaust gas; and
a partitioning structure, which partitions a space between the casing and the housing into the gas introduction port side space and the gas lead-out port side space, is provided.

7. The exhaust gas sampling apparatus according to claim 5 or 6, wherein
the cooling device cools the diluted exhaust gas by circulating coolant,
the exhaust gas sampling apparatus being configured to cool the diluted exhaust gas to a desired temperature by controlling a flow rate of the coolant depending on the diluted exhaust gas flow rate set by the flow rate control mechanism.
